Europäisches Patentamt

(19) European Patent Office

Office européen des brevets

(11) Publication number: **0 099 261**
**A2**

(12) **EUROPEAN PATENT APPLICATION**

(21) Application number: **83304005.8**

(22) Date of filing: **08.07.83**

(51) Int. Cl.³: **B 03 B 9/06**
**B 07 B 9/00, C 10 L 5/46**

(30) Priority: **09.07.82 GB 8219911**

(43) Date of publication of application:
**25.01.84 Bulletin 84/4**

(84) Designated Contracting States:
**AT BE CH DE FR GB IT LI LU NL SE**

(71) Applicant: **Greater Manchester Council**
**County Hall Piccadilly Gardens**
**Manchester M60 3HT(GB)**

(72) Inventor: **Bult, John Michael Elston**
**106 Woodhouse Lane**
**Sale, M33 4LH(GB)**

(72) Inventor: **Rose, Alan Hanson**
**5 Millon Drive**
**Unsworth Bury, BL9 8NJ(GB)**

(72) Inventor: **Naylor, Albert Edward**
**Greenhill Common**
**Lower Whitley Cheshire, WA4 4JD(GB)**

(72) Inventor: **Higgs, Jack**
**"The Bungalow" Off Hutton Avenue**
**Ashton-Under-Lyme OL6 6Q2(GB)**

(74) Representative: **Senior, Janet**
**Abel & Imray Northumberland House 303-306 High**
**Holborn**
**London WC1V 7LH(GB)**

(54) Refuse treatment.

㊾ In various prior art processes in which refuse is treated for production of fuel, there is complete pulverisation of glass. Any glass in the product can cause problems when it is used for fuel or compost. We have found that if refuse is subjected to controlled attrition in a rotary pulverising drum the glass is easily and efficiently removable from the treated product.

The present invention provides a process for treating refuse, which comprises subjecting refuse to rotary drum pulverisation with limited attrition, separating the pulverised refuse into a relatively glass-free portion (contraries) and a glass-containing portion (fines), and separating the glass-containing portion into a glass-rich fraction and a glass-lean fraction, the glass-free portion and the glass-lean fraction being retained for fuel and/or compost.

For limited attrition the drum should be operated at slow speed and the treatment time should be comparatively short.

The invention is also concerned with a dual-purpose plant which can be used for producing either landfill or fuel/compost according to the process adopted and the dictates of the market.

EP 0 099 261 A2

- 1 -

## REFUSE TREATMENT

This invention relates to the treatment of refuse.

Municipal refuse is most usually disposed of by landfill methods. The refuse is generally broken-down/compacted in some way, for example by pulverising or composting. For example, it may be pulverised in hammermills operating at high speed or in rotating drums, with an average residence time of about 4 to 5 hours, in which case break-down is mainly mechanical - by virtue of the tumbling action of the refuse in the drum - or composted in rotating drums for a much longer period, in which case break-down is mainly biological. Some methods of operation of a rotary pulverising drum involve the addition of water or other liquid. Water is added in composting to assist degradation and in other processes the aim of liquid addition is to weaken the fibrous materials and to add density so that the pounding is more severe; the product is not substantially biologically degraded, but the process gives a more compact handlable material.

In Greater Manchester alone, the rubbish collected from households and factories amounts to 1½ million tons per year. It can be seen that very considerable quantities have to be disposed of each year, so that, even after the various possible treatments, very large tracts of land are required for dumping. This presents more and more of a problem as time goes on. At the same time, the desirability of recycling is being recognised and there have been various proposals for processing waste for use as compost or fuel. The idea of processing refuse for use as fuel is especially attractive at the present time in view of the recent energy crisis and general public consciousness about the need for energy conservation.

In most methods for refuse derived fuel production (RDF), the size reduction of the refuse prior to its further processing is a hammermill pulverisation. Few processes have used rotary drum pulverisation.

One process that does use rotary drum pulverisation is the General Engineering Radcliffe process. In this, the tumbling action of the refuse in the drum accomplishes the size reduction. If the pulverised refuse is to be used for composting, it is normally enriched with sewage sludge, but for fuel manufacture it has been envisaged that waste oil would be used. The treatment period in the drum is approximately 6 to 8 hours and the drum length can be as long as 25 m depending on the plant design throughput.

Another prior method for a refuse derived fuels system has optional addition of sewage sludge to the refuse in the drum and proposes a long drum for processing and biologically drying the refuse. Whilst this process has the advantage of simplicity, it has certain shortcomings, the main one being the high capital cost of extremely large gestation drums needed to give the material the required residence time. According to one suggestion, the refuse, generally after pre-pulverisation, would be composted for 12 to 48 hours.

After size reduction, the next stage in the various processes for compost or fuel production is usually a separation step or steps to produce a fraction with better compost or fuel properties. Remaining fraction(s) are usually discarded, although, in some, provision is made for metal recovery. Conveniently, the primary separation is according to size. As will be appreciated, the nature of the pulverising process affects the break-down of the refuse; thus, for a given dividing line between the fractions, the nature of the fractions and characteristics of the fractions as a fuel could depend on the method of pulverisation. With rotary drum pulverisation for compost or fuel production, the division is generally into the fines, previously known in the art as "product", so named because it was generally retained for further use, and the coarse or "contraries", which were rejected.

The division between fines and contraries has necessarily been somewhat arbitrary, but a suitable division is one based on a screen size in the range of from 1¼ to 2 inch (or 32 to 50 mm): the fines are those that pass through the screen and the contraries those that do not. On this division, fines are composed mainly of paper, glass and vegetable matter but also contain some plastic and small solids, whereas the contraries are composed mainly of paper and plastic, some textile and small amounts of glass. The metal content is mostly in the contraries. Because of problems associated with their size, and expense involved in size reduction, contraries produced in rotary drum pulverisation were originally regarded as being unsuitable for fuel, and the processes generally aimed to maximise pulverisation in the drum to produce a high proportion of fines which could then be used for fuel.

In GB 2,082,628 A, for example, waste material is passed through a rotary pulverising drum and the volume of waste in the drum, the speed of rotation of the drum and the rate of flow of the material through the drum are controlled so as to obtain a residence time and component collision frequency and intensity sufficient to produce transfer of moisture between the components via mutual component contact, breakdown of the components into small particles and intimate admixture of the small particles; fuel is obtained from the admixture of particles by separating those particles less than a pre-determined size.

GB 2,076,698 A also discloses treating refuse in a rotary pulverising drum of sufficient length that the treated product is in a fragmented form of limited particle size and organic constituents of the refuse are uniformly dispersed. The specification indicates that the fines are valuable as a supplementary fuel or for the production of compost.

One problem about the use of fines for these purposes, however, can be the glass content. This can, in fact, cause considerable problems with fluidised bed combusters. There is therefore a need for a process for producing fuel or compost which is relatively free from glass.

US 4,095,956 and US 4,050,388 both disclose processes in which the glass is broken into fragments which are separated off and the larger size fraction is used for fuel production.

In US 4,095,956, waste is processed by means of trommels, which are large rotating drum screens. The waste is screened by passage through a first trommel having large holes and the rejects from this screening are reduced in size by coarse shredding. Material that passes through the holes is passed through a second screen (rotating trommel) having 2½ inch holes; frangible material such as glass is broken by the lifting and dropping action and drops through the holes of the trommel. The remaining waste is mixed with the shredded rejects from the first trommel for use as fuel.

In US 4,050,388, waste is treated in a rotary pulverising drum and the pulverised material is separated; the non-pulverised material (such as cans and rags) can then be separated in an air separator and the heavier materials, after removal of iron, can be pulverised in a hammermill. In this, any glass is ground to very fine particles which are then screened off. Other material from the hammermill is subjected to combustion for the purpose of creating steam, part of which is used in a steam turbine and part of which is fed into the rotary drum.

In these processes described above the degree of pulverisation of the glass is not critical.

Surprisingly, we have found that if refuse is subjected to minimum attrition in a rotary pulverising drum the glass is easily and efficiently removable from the treated product.

Thus, we have found that it is possible to operate a rotary pulverising drum process such that, surprisingly, the glass pieces in the product fall within a comparatively narrow size range and a high proportion of usable product falls in a smaller or larger size range than this and can be processed to fuel and/or compost. Furthermore, even better

0099261

- 7 -

separation can be achieved by utilising in addition other differences in the pulverised product, e.g. density or weight.

Thus, surprisingly, we have found that by a selective pulverisation usable fuel, which is substantially free from glass or which contains a tolerably low level of glass, can be produced from both the upper and the lower ends of the particle size spectrum.

The product is also suitable for production of compost. Of course, as will be understood, the product is not sufficiently degraded for immediate use as compost, but may be subjected to a composting treatment or sold as compost feedstock, and references herein to use for compost production should be interpreted accordingly.

The present invention provides a process for treating refuse, which comprises subjecting refuse to rotary drum pulverisation with limited attrition, separating the pulverised refuse into a relatively glass-free portion and a glass-containing portion, and separating the glass-containing portion into a glass-rich fraction and a glass-lean fraction, the relatively glass-free portion and the glass-lean fraction being retained for fuel and/or compost production.

The relatively glass-free portion is preferably substantially free from glass; for example, at least

- 8 -

95 % by weight of the glass is preferably in the "glass-containing portion". However, less of a separation of the glass content is acceptable in the first separation step if this is corrected by a later separation step; for example, there may be a split of about one third of the glass (by weight) in one portion and two thirds in the other.

The first separation is, for example, suitably accomplished by a screening method according to size, wherein the substantially glass-free portion is taken as the portion that does not pass through the screen, that is, as the portion of more than a pre-determined size. Thus, in this process the part of the product from the drum which is generally coarser than the glass (the "contraries") is separated by a screening method; the fines can then be further classified by removal of the glass-rich fraction.

Thus, the present invention provides a process for treating refuse, which comprises subjecting refuse to rotary drum pulverisation with limited attrition, separating the pulverised refuse into fines and contraries and processing the fines and/or the contraries for fuel and/or compost.

The term "limited attrition" is used herein in connection with the rotary drum pulverisation step in the present invention to mean that the pulverisation is such that in the pulverised product there has been breakage of the friables but substantially no disintegration; for example, paper remains as paper and bottles are merely broken down, not fragmented.

The extent of attrition will depend primarily on such factors as the speed of the drum, the gate opening and the feed rate, which affect the extent of filling and the residence time in the drum, and on the water content of the material being pulverised. Limited attrition is assisted by build-up of refuse on the inside of the drum, which has a cushioning effect and for this the drum should be operated at slow speed and with not too dry a feed material; under these conditions the drum will not be scoured. The person skilled in the art will easily be able to adjust the conditions of the rotary drum pulverisation to limit or control attrition such that the glass in the product is incompletely pulverised and is easily removable.

A suitable drum speed is, for example, up to 3 or 4 rpm, preferably 2 rpm or less, more especially 1 to 2 rpm, especially with dry operation.

Suitably the drum is not overfilled; we have used the drum about a third full, but other degrees of filling are of course possible, e.g. 40 % by volume or up to 60 % by volume or more may be suitable.

A suitable residence time is up to 5 hours, preferably no more than 4 hours, more especially 1 to 2 hours. For wet operation periods of 4 to 5 hours' residence time and for dry operation up to about 2 hours are common.

A suitable water content is 30 to 40 %, preferably substantially 35 %. Dry pulverisation would seem to be preferable since the end product, fuel, is preferably dry. However, advantages in these respects may be off-set by lower throughput and if the product is subjected to a drying operation in any case the cost of removing more moisture may be comparatively low. Moreover, if the drum is operated under too dry conditions over an extended period, there may be wear of the cushioning lining, resulting in greater attrition of the refuse. The operator will easily be able to adjust the water content of the refuse input, if necessary, to obtain the desired balance.

Usually, however, no additional water is added to the refuse for fuel production and the residence time is at the lower end of the range, for example about 1½ hours. This type of operation without extra water is called "dry" for comparative reasons, although it can still be classed as wet in the true sense due to the inherent moisture in the incoming refuse.

These conditions contrast with the conditions in GB 2,082,628 A where the aim is to maximise the particle size reduction (i.e. the formation of fines) and produce a homogeneous material, preferably with a particle size of 5 mm or less.

In the process of the present invention, limited attrition promotes the formation of contraries at the expense of fines. Generally, at least 50 %, preferably at least 60 %, especially at least 65 % or 70 %, by weight of the material should be in the contraries (e.g. over 50 mm).

With dry operation and using a 32 mm screen, the output may be, for example, approximately 45 % by weight fines and 55 % by weight contraries (of which 5 % is ferrous metal). With wet operation, output may be, for example, approximately 50 % fines and 50 % contraries (5 % of which is ferrous metal). The majority of the glass is in the fines.

Moreover, surprisingly, we have found that in the dry process the water content of the product is not homogeneous. The free moisture, for example in vegetable matter, apparently does not wet the paper content of the refuse, although it is thought that it affects the edges of pieces of paper and books, since, after passage through the drum, paper edges look nibbled and book covers fall off. Thus, with limited attrition there is limited transfer of moisture; the fines have a higher moisture content than the contraries: the latter fraction is drier than one would expect.

It will thus be apparent that the contraries (that is, the material more than a pre-determined size) are the more attractive material to manufacture

- 12 -

into fuel. Moreover, surprisingly, the selection of contraries and processing them for fuel is possible in both wet and dry processing.

Thus, the present invention also provides a process for treating refuse, which comprises subjecting the refuse to rotary drum pulverisation with limited attrition, separating the pulverised refuse into fines and contraries and retaining the contraries for fuel or compost production.

However, for use for example as fuel, the excessive particle size of the contraries can be a problem. The particle size can, of course, be reduced by passage through a second rotating drum or by increasing the residence time within the first drum, but the latter would lead to greater attrition of the glass, and both methods would increase the capital cost of the plant considerably. A preferred method is to take the contraries after passing through the pulverising drum and shred them into an acceptable size for a fuel. They may then be used, optionally after further processing, as a fuel in their own right or as a feed to a pelletising plant.

The further treatment of the contraries for fuel production comprises, for example, removing the ferrous metal, shredding, and, if desired, further classifying and/or drying.

(The term "pulverising" is used herein for the size reduction of crude, as received, refuse, and "shredding" for the size reduction, after the limited pulverising treatment, of the contraries separated from the fines.)

Desirably, any glass in the contraries should not undergo disintegration in the shredder: formation of splinters should be avoided. In a low speed shredder such as we use, for example, material is generally reduced to about 4" in size and any glass, being initially under this size, passes through comparatively unscathed. The glass can be removed in the subsequent further classification step; this has not proved difficult in practice.

The fines contain more glass, as well as more water, than the contraries, and thus might be thought of as undesirable. However, the limited attrition in the pulverisation process makes an efficient separation of the glass possible, so that a high proportion of combustible or organic or ash-containing compost material is recoverable, thus improving the gross efficiency of the whole process. Thus, the fines may be rejected and used as landfill or, preferably, further processed for fuel or compost production.

In contrast to the General Engineering Radcliffe process, which also utilises fines for fuel, the process of the present invention does not require addition of sewage sludge or waste oil to the rotary drum pulverising step.

Thus, the present invention further provides a process for treating refuse which comprises subjecting refuse, without addition of sewage sludge or waste oil, to rotary drum pulverisation with limited attrition, separating the pulverised refuse into fines and contraries and processing the fines for fuel and/or compost.

The further treatment of the fines comprises, for example, removing the ferrous metal, glass and other incombustibles, and, if desired, drying.

Preliminary assessment indicates that removal of a substantial proportion of the glass will give a product suitable for use as fuel or compost feedstock; very fine screenings in particular are more suitable for use to produce compost.

We had initially expected that passage of the fines through a 1/4 or 1/2 inch screen would give a coarser fraction which could be mixed in with the contraries, the smaller particles, containing more glass, being discarded.

We found that, surprisingly, the glass distribution is very peculiar: if there is limited attrition of the glass by the pulverising drum, the product emerging from the drum contains relatively large pieces of glass which are easy to separate. In the fines product, only a very small percentage, for example of the order of 2 to 5 %, of the glass is less than 1/4 inch in size. The majority of the glass is present as identifiable pieces, mostly 1/2 inch or more in size, which could be picked out by hand or separated by a sieve.

Thus, by separating off the generally coarser fraction of the fines, most of the glass could be removed and the remainder of the fines fraction retained for fuel or compost. Instead of or in addition to separation according to size, other separation methods may be used.

Different forms of separation that may be used include

(1)    screening, which may be either rotary or vibratory; rotary may be preferred as fibrous material can be held on vibratory decks, whereas rotary screens are self-cleaning;

(2)    air classification which works on the age-old principle of winnowing, whereby an air blast fluidises or entrains particles which fall into the desired shape and density range; thus, by suitably contacting size-reduced refuse with an air stream, the "lights" may be entrained, while the "heavies" continue onwards for further processing or disposal;

(3)    ballistic or density separation for glass and other dense incombustibles and any remaining metal;

(4) mixed separation methods, utilising a mixture of these basic techniques.

A simple size separation is not the most efficient, since some of the combustible material would be lost with the glass-rich fraction. Simple ballistic separation tests carried out on the fines showed that separation by this means was possible, but, with this, pre-screening into various size fractions may be necessary to obtain a completely acceptable recovery. Mixed technique methods are probably preferable.

Similar separation methods may be used for the further classification of the contraries, for example ballistic separation, air classification or mixed techniques.

Thus, the process of the present invention may comprise pulverising the refuse with limited attrition (and this can be done in traditional rotary pulverising drums); separating the output into two streams: fines and contraries; separating off a glass-rich fraction from the fines; removing the ferrous metal from the contraries and shredding the contraries stream in a shredder; and, if desired, further classifying the shredded contraries material.

The glass-lean product from the fines may, if desired, be added to the shredded and optionally further classified contraries and used as such or fed to a dryer and hence to a briquetting machine; alternatively, there may be separate dryers should a different type of dryer be found more suitable for the more fibrous fines, and drying may be before or after the separation/further classification. However, the separation of the fines is probably better done with the fines in the as produced state, before drying, as drying could have the effect of "locking in" some of the finer incombustibles.

The refuse treatment process is preferably carried out in an integrated fuel-producing refuse treatment plant which can operate with wet or dry processing and in which the extent of attrition during pulverisation can be varied. In this way, the plant may be used to produce fuel, compost or compost feedstock or landfill or two or all of these. Usually it will be operated as a dry process for fuel and/or compost production and wet for landfill. For fuel production there should be limited attrition of the refuse during pulverisation, but for landfill the refuse is advantageously subjected to a pulverisation with maximum attrition. For the latter processing, therefore, high drum speeds and/or long residence times may be used in the rotary drum pulverisation.

The present invention also provides a process for treating refuse which comprises subjecting the refuse to rotary drum pulverisation and wherein the pulverised refuse

(a)   in some instance(s) is separated into fines and contraries and the contraries and/or fines are processed for fuel and/or compost, and

(b)   in other instance(s) is used as landfill, if desired after recovery of particular material(s),

and wherein, in the case of (a), the rotary drum pulverisation is operated with limited attrition of the refuse. It will be clear that this requires a dual-purpose plant suitable for the processing treatment (a) and for the processing treatment (b).

The present invention also provides a dual-purpose plant suitable for the production of fuel and/or compost or compost feedstock and for the production of landfill, which comprises a rotary pulverising drum capable of being operated with limited attrition of the refuse, means for separating the product of the rotary drum pulverisation into a fines fraction and a contraries fraction such that the major portion of the glass is in the fines fraction, means for removal of ferrous metal from the contraries and means for shredding the contraries, and means for density separation of the fines into glass-lean and glass-rich fractions and preferably for density separation of the contraries.

The choice of the dividing line between

(i) the glass-containing portion (referred to herein generally as 'fines') and the relatively glass-free portion (referred to herein generally as 'contraries') in the or the first separation,

(ii) the glass-lean fraction of the fines and the glass-rich fraction of the fines in the optional second separation, and

(iii) the material to be discarded and material to be retained in the optional further classification of the contraries

and the choice of separation methods in each case may be governed by various factors, but a man skilled in the art would easily be able to ascertain the dividing line(s) and separation method(s) for optimum processing and optimum end products. For example, the nature of the incoming refuse, the speed of rotation of the drum, and the material to be processed at the particular stage in question, the throughput desired and the desired quality of the fuel (or compost) may all influence the dividing line and separation method and indeed are inter-related.

For the main division into fines and contraries, a screening method using a screen size in the range of from 1 to 2", especially 1¼ to 1¾", more especially 1½

inches, may, for example, be used.

In general, the division between the contraries and the fines is such that most of the glass is in the fines, and the glass should just pass through the screen.

Advantageously, the pulverised material is passed through a prior screen, e.g. 6" or 8", to remove large items.

For the sub-division of the fines, a method such that at least 70 %, especially at least 80 %, of glass is in the glass-rich fraction of the fines is suitable; if this is done by screening a screen with size in the range of from $\frac{1}{4}$ to $\frac{1}{2}$ inch, e.g. $\frac{1}{2}$ or $\frac{1}{4}$ inch, may, for example, be used.

In addition to the above separations, magnetic separation of the ferrous scrap is usually a must, because of the damage the metal can do to the shredder and because of the damage "tramp iron" can do downstream to conveyors or stokers, and also because of the problems caused by slagging of molten cans in the fire bed. Possible methods of magnetic separation that may be used are:

(a) overband magnetic pulley and

(b) magnetic conveyor pulley.

Other separation processes may also be carried out instead of, or in addition to, the above processes.

The invention will now be described in further detail, by way of example only, with reference to the accompanying drawings in which:

Figures 1 and 2 represent process line diagrams for different integrated fuel- and/or compost-producing refuse treatment systems;

Figure 3 represents a possible mass balance of the product according to one method of dry operation; and

Figure 4 represents the layout of a dual-purpose landfill and fuel/compost plant.

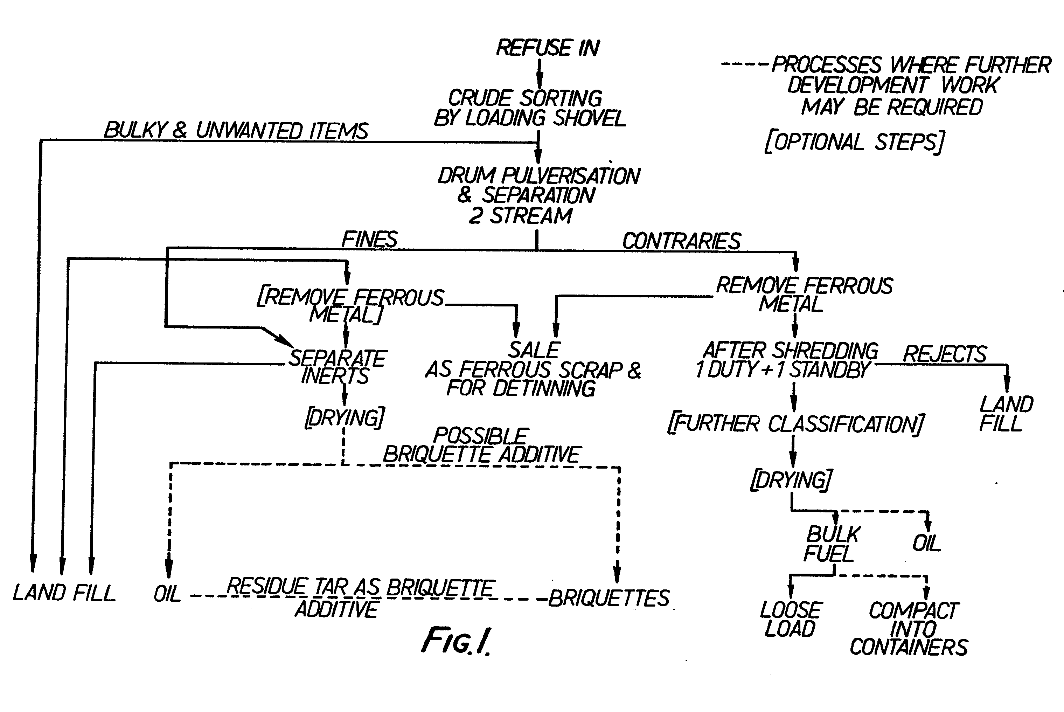

As will be seen from the two flow sheets and mass balance sheet, (Figures 1, 2 and 3), there are a number of alternative routes to fuel and compost.

Figure 1 shows that fuel or oil production from fines and contraries streams may be possible.

The crude contraries may be treated for example as follows:

(1)    They may undergo limited treatment comprising removal of the ferrous metal by magnet and, in the case of dry operation, shredding, which is advantageously carried out after metal removal (as shown in Figure 1).

The product may then be used as a crude fuel (or compost or feedstock) or for landfill.

(2) They may undergo further processing, that is, the crude product is treated as in (1) and then subjected to one or both of the following treatments:

(a) further classification,

(b) drying and optionally briquetting.

The product is advantageously used as a fuel, in which case preferably it undergoes the further classification, and may also undergo drying, usually after the further classification (as shown in Figure 1).

The crude fines may be used as landfill or treated for example as follows:

The product, optionally after removal of ferrous metal, is subjected to a further classification step, that is, a fraction containing inter alia glass and all heavy materials, including some vegetable matter and pellet-shaped paper, is separated. This fraction is used as landfill, and the other fraction(s) as fuel (or compost feedstock), for example after drying and optionally briquetting (as shown in Figure 1).

The chart in Figure 1 also suggests the possibilities of oil production.

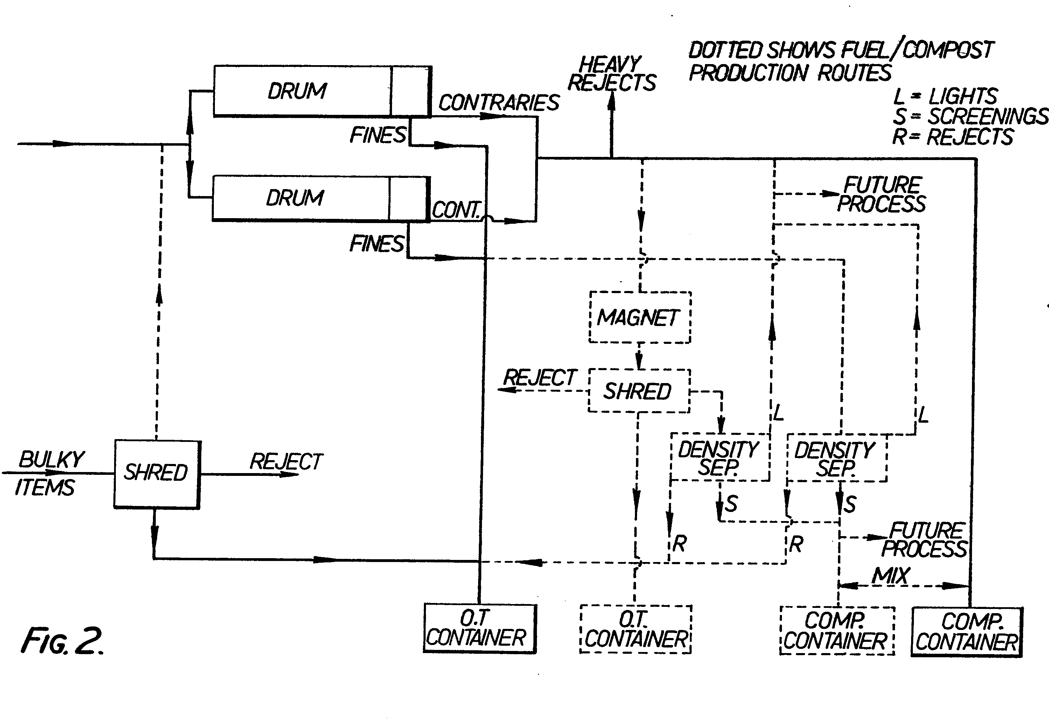

In Figure 2, the contraries stream, after removal of ferrous metal, is shredded; the shredded material may be retained as such for fuel or compost or passed to a density separator for further classification. The fines stream is also passed to a density separator for removal of a glass-rich fraction.

A machine which has been found to work efficiently is a Bootham North machine (Bootham North, Worksop, U.K.) which is a mixed technique machine: a variable inclined vibrating screen density separator. In use, air passes through the screen and the product is divided into 3 fractions as follows:

screenings

lights

rejects (heavies)

Screenings are the portion passing through the screen and lights and heavies those that do not, the lights being collected at the top of the inclined screen and the heavies at the bottom. The screen size depends on the glass size in the product to be screened; we have used one with 10 mm holes. The dividing line between the fractions, however, is not exact, but the screenings are mainly pulverised paper, ash and small heavy particles. Lights are usually paper and film plastic; heavies are glass, stones, metal, balled paper, heavy plastic etc. This has the added advantage that a separate process step for removing ferrous metal is not generally required.

The Bootham North machine has also proved suitable for the contraries sub-classification.

The glass-lean fractions, the lights and screenings, may be combined or, for example, as shown in Figure 2, the lights from the fines and lights from the contraries may be combined and the screenings from the fines and from the contraries may be combined. In one embodiment, by the latter method we have obtained a less than 10 mm fraction (combined screenings) and a more than 10 mm fraction (combined lights) which serve as different grades of fuel.

There may also be further refining of fines and/or contraries, to obtain progressively smaller glass contents. In general this is likely to be less important for the contraries since they have a smaller glass content. The further refining may, for example, be by a second, subsequent, screening or the machine used for the main screening may be a 2-screen machine. We have used such a Bootham North machine for both contraries and fines; the screen sizes being 1" and 10 mm for the contraries and 10 mm and 4 mm for the fines, and the products have been combined on a size basis. Thus, the below 10 mm contraries (contraries secondary screenings) have been combined with the below 10 mm, above 4 mm, fines (fines secondary lights) and the above 10 mm contraries (contraries secondary lights) have been combined with above 10 mm fines (fines first screening lights).

The product from the secondary fines screening, less than 4 mm, has a high ash content and is more suitable for use for compost (i.e. as compost feedstock).

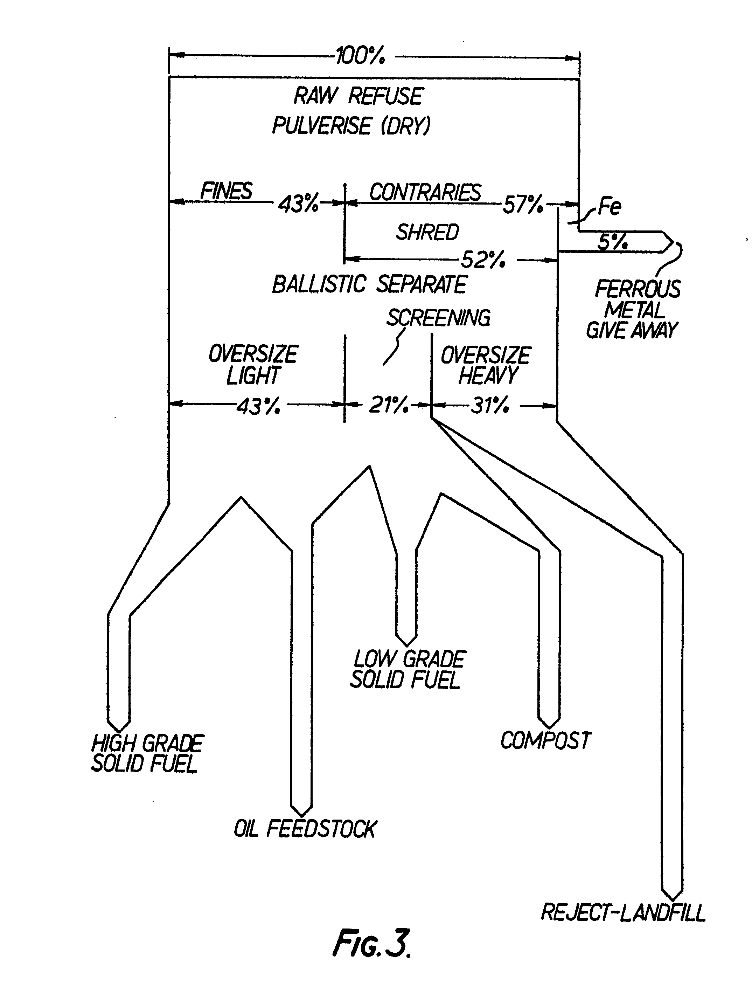

Figure 3 illustrates possible uses of the treated refuse, but gives figures by way of example only.

As shown in Figures 1 and 2, there may be prior removal of bulky/unwanted items from the untreated refuse. Certain other items may be rejected by the shredder, but preferably are manually removed before entering the shredder.

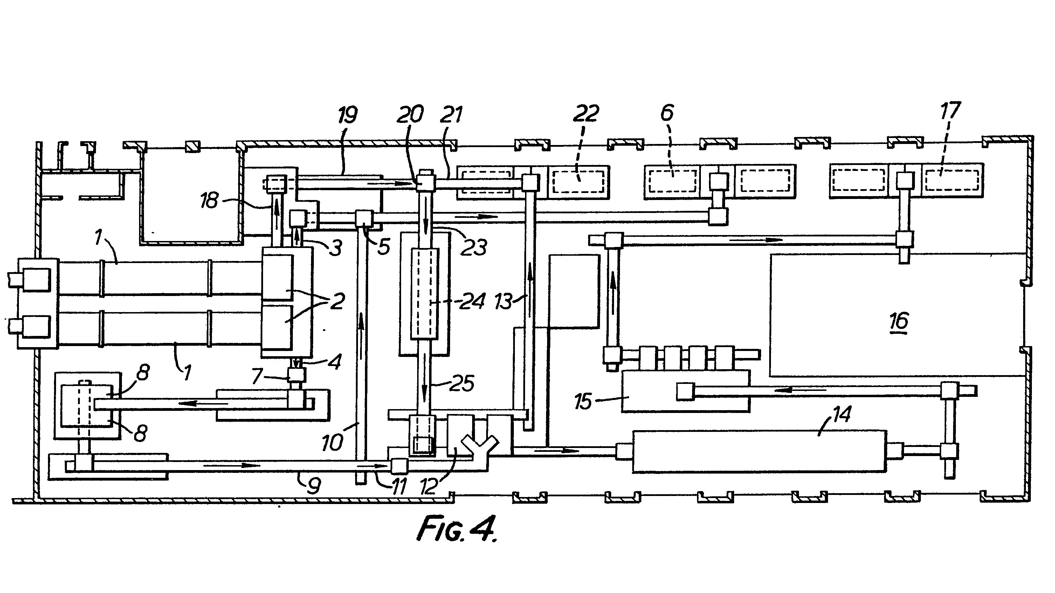

Referring to Figure 4, the plant is equipped with two pulverising drums 1 and the raw refuse, if desired wetted to the desired moisture content, is fed into the drums, rotating at for example 1 to 2 rpm, at a throughput rate commensurate with a residence time of about 4 to 5 hours in the drum for wet processing or, more usually, 1 to 2 hours for dry processing. Although the main process in the drum is pulverising, some composting inevitably occurs, but this is small and, for example, carrots are still identifiable as carrots. At the end of the drums there is a 6" screen followed by a screen 2, which may be, for example, 1½

or 1¼" or 45 mm, and which separates the product into a fines product and a coarse product (contraries). The 6" screen merely prevents the screen 2 from becoming clogged. The contraries or coarse material, more than 1½" (or 1¼" or 45 mm respectively) in size, constitute the greater proportion of the product from the drum (with dry processing) and contain most of the metal. The fines, less than 1½" (or 1¼" or 45 mm) in size, constitute the smaller proportion of the product from the drum.

The crude contraries may be processed as follows:

At the end of the drum there is a reversing collecting conveyor for the contraries; usually during wet processing the conveyor is run so that the product proceeds via path 3 and during dry processing usually the conveyor is run so the product proceeds via path 4.

Proceeding by path 3, the ferrous metal content is removed by magnet at station 5 and the product is stored in a compaction container 6.

Alternatively, proceeding by path 4, the ferrous metal is removed by magnet at station 7 and the material is then conveyed by an elevating conveyor to feed one of two shredders 8. If a blockage occurs, the machine clears itself by reversing, thereby protecting against damage. (However, there is preferably also supervision of material prior to or leaving the station 7 and any potentially damaging item is removed manually.) The shredders operate by contrary rotatory knives operating e.g. up to 40 rpm, and bring 80 % of the material below 4" in size. For example, objects such as newspapers, which come out of the drum in rolled-up form, are cut up. The calorific value is not affected. The shredders 8 feed a common collecting conveyor which itself feeds an elevating conveyor 9, a reversing conveyor 11 and a return conveyor 10. By means of the reversing conveyor the shredded contraries can go forward to a drying and pelletising sector or be returned to the contraries elevating conveyor and hence to container loading. Thus, the reversing conveyor 11 can feed the product up along conveyor 10 to the compaction container 6, or to a density classifier 12. In the density classifier 12, glass and other heavy incombustibles are removed. After the density classification and before drying the product may be tapped off (not shown in the drawing). The rejects from the density classification - mostly glass - may be fed into the "fines" processing via path 13. The product may then be passed through a drying drum 14 where the air temperature is about 350°C (high enough to kill the bacteria: no composting occurs), until it is dry enough, but not too dry, for briquetting: considerably less than 4 to 5 hours, usually one hour, is sufficient. A crop (grass) drier is suitable as the drying drum 14. After the drum 14, the product, which still contains for example 10 to 15 % moisture, may be conveyed to a briquetting, or pelletising, machine 15. A briquetting machine used for animal feed stocks is suitable for adapting for the present purpose. (The present generation of pelletising plants is probably too sophisticated and complicated to be seriously considered, as reliability is the prime consideration in refuse disposal. Our view is that a less refined system could be more attractive and briquetting machines of the Papakube Corporation Energy Cube densifier type are more suitable for compacting shredded contraries after some drying treatment.) The "dry" product will be stored as briquettes in a storage area 16 or in a container 17. The product, with or without the drying and pelletising steps, is preferably used as a fuel (a crude fuel or "refined" fuel), or it can be used as landfill although, if so, generally the further classification will be omitted.

The contraries may constitute for example about 50 % of the product from the drum and, after further classification/drying, 70 % of this may be recoverable as usable product.

The fines may be processed as follows:

The fines from the drum 1 are conveyed by a collecting conveyor 18 from the screen 2 and by elevating conveyor 19 and may undergo only limited treatment, that is, removal of ferrous metal by magnet at station 20 and, after being conveyed by fines reversing conveyor 21, they are stored in a container 22. Alternatively and preferably, they may undergo further classification to separate the relatively incombustible fraction from the more combustible fraction. For this, by operating a reversing conveyor 21 they are conveyed along path 23 and screened at a fines screen 24 to remove incombustibles; a $\frac{1}{4}$", $\frac{3}{8}$" or $\frac{1}{2}$" screen is suitable. The coarser fraction of the fines, which contains a substantial proportion of glass, is discarded. The remainder is incorporated with the contraries for the classification processing. With certain types of separator the pre-screening can be omitted (see Test 7). In this way, up to 90 % of the glass may be removed from the fines. The coarser fraction after the limited treatment.stored in container 22 would be used as landfill, as would be the relatively incombustible product of the further classification step, and the finer, more combustible, fraction of the fines would be processed to fuel.

In a modification of the process, the fines screen 24 is replaced or supplemented by a density separator or a bank of suitable density separators and preferably the classification of the fines and contraries by density separator is into 3 fractions each as shown in Figure 2 and as described above (screenings, lights and contraries), and the products from the density separators are combined on a size basis.

In a further modification of the process, the product, or part of it, may be used as compost feedstock; reference should be made in this connection to Figures 2 and 3.

The overall size of the plant is suitably about 125 metres x 50 metres, preferably with extra area being available for storage. The plant may, for example, handle 36 tons per hour, using 2 drums. The plant may, for example, be direct rail-based and the products go into containers. The drums may be about 80 ft long and preferably the plant should be designed so that retrospective modification will be possible.

One plant designed for use for production of landfill which is being adapted for the process of the invention is the North Manchester plant, which is described below by way of example only.

The plant is provided with 20 tipping bays located around the main plant and serving 2 main storage bunkers. Each bay is equipped with three adjustable water sprays to suppress dust and, if desired, to moisten the refuse. Two overhead cranes are used to transfer the refuse from the 2 storage bunkers to pulverising drums. Particularly bulky waste can be broken prior to pulverisation in a shredder fed by either an overhead crane or manually from the back of a lorry. Two feed hoppers, each feeding a pulveriser drum, are used to control the in-put to the main treatment process, and feeder rams from the hopper deliver raw refuse into the pulverising drums.

The heart of the treatment process comprises two rotating drums each of length 24080 mm and 3790 mm diameter which pulverise the raw refuse. Water may be fed into the drums to aid the pulverisation process. Each drum is lined along its length with tumbling bars and intermittent spurs to prevent long rolls of refuse forming. Internal friction rapidly distintegrates the soft bulky waste and the harder material is broken up by falling. The drums can be operated at any of three speeds: 1.19; 2.38; or 3.56 rpm. The relatively slow revolving speed of the drum ensures a low rate of wear with a high degree of reliability. The drums are designed to cope with the abrasive materials normally found in refuse. The interiors are protected by flat bars welded on the edge around the inside of the shell. Moistened refuse is compressed into the space between the bars by the weight of the material as the drum rotates. As the refuse dries out and hardens, the pulverised material itself forms a protective lining for the internal surface of the drum. A useful by-product is that the pulverised material has high sound insulation properties, and thus greatly reduces noise from the drum.

Projecting steel spears are fitted throughout the drum and the inner screen to provide a tumbling action to help break up any accumulation of waste textile material. The drum is rotated by a girth gear ring approximately two-thirds along its length. This gear is driven through pinions by hydraulic motors mounted under the drum. The drum is supported on rollers which allow it to rotate freely. At the out-put end of the drum are screens which separate the treated material.

Refuse from the out-put gate of the drum falls onto an inner screen cylinder made up to 150 mm holes which allows the coarser treated refuse to pass to an outer screen. This screen comprises 45 mm holes at 200 mm staggered pitch. Two out-put chutes collect the treated refuse from the screens, which have separated the fines from the contraries.

The chutes feed two conveyor systems, one carrying the coarser contraries and the other the fines.. Material from the conveyor system is discharged into a delay hopper from which it is loaded into I.S.O. open topped containers.

This plant may be adapted for the processes of the present invention as described above and as shown in Figs. 1 to 4 of the accompanying drawings.

The rotary pulverising drums may be run for example at 1 to 2 rpm.

One way of adapting a drum pulverisation plant designed for wet operation, to improve operation in the dry mode, recognises that a restriction to throughput is the size of the outlet door. Accordingly, this is advantageously increased to make it as large as possible. It is possible that the removal of the end wall would still give an acceptable product in the wet mode and a better product in the dry mode with the operational advantage of reduce gate blockages.

It is an advantage of the proposed plant that items can be conventional items of technology.

Thus, the system may be operated equally well, without modification of the drum,

(i)  to produce traditional landfill.product, and (ii) to produce fuel.

Which product is produced will be governed by the dictates of the market.

It is of course preferable to produce a fuel or compost rather than a landfill product, since for landfill the costs of transport could be as high as £10,000 per day (1982 £) if 2,000 tons of product per day are transported, and it is estimated that the equivalent of about £6 m of coal is being buried per year in this way by the GMC alone.

Due to steadily increasing fuel costs, it seems likely that fuel plants using domestic refuse as a feedstock will certainly be built, but the exact type has not been clearly established. The types presently operating or planned in the U.K. fall into two categories:-

(a) those using loose, medium calorific value, "floc" fuel.

(b) those using pelletised, high calorific value, fuel.

Our plant is designed to be suitable to produce both (a) and (b). The "floc" fuel can be produced, for example, by shredding wet or dry operation contraries.

The following tests illustrate aspects of the invention.

Tests

Tests have been performed on the products from the North Manchester plant and from the Radcliffe test plant. The Radcliffe plant differs from the North Manchester plant described above in having a gravity feed rather than ram feed to the drum, in the diameter of the drum, and in having a different screen size ($1\frac{1}{4}$").

The following results were obtained. Except where otherwise stated, the products were from the Radcliffe plant and using dry operation.

1.  <u>Test 1</u>

We investigated the product of wet and dry pulverisation for its fuel potential. The results were as follows:

<u>Table 1</u>

| | "Wet" processing | | "Dry" processing | |
|---|---|---|---|---|
| | Fines * | Contraries * | Fines * | Contraries * |
| Average Moisture | 50 % | 45 % | 40 % | 27 % |
| Average Calorific Value | 2750 BTU/lb gross | 3800 BTU/lb gross | 3200 BTU/lb | 5000 BTU/lb |

* after removal of metal

2.  <u>Test 2</u>

We investigated the contents of combustible and non-combustible material in the contraries and fines products of Table 1. The results were as follows:

<u>Table 2</u>

|  | "Wet" processing | "Dry" processing |
|---|---|---|
|  | Contraries * | Contraries * |
| Average Combustibles | 35 % | 53 % |
| Average Incombustibles | 20 % | 20 % |
| Ratio combustibles : incombustibles | 1.75 : 1 | 2.65 : 1 |

* after removal of metal

<u>Table 3</u>

|  | "Wet" processing | "Dry" processing |
|---|---|---|
|  | Fines * | Fines * |
| Average Combustibles | 30 % | 35 % |
| Average Incombustibles | 20 % | 25 % |
| Ratio combustibles : incombustibles | 1.5 : 1 | 1.4 : 1 |

* after removal of metal

The incombustibles are mainly glass.

These Tables show clearly that a further separation step to remove some or all of the incombustibles is desirable.


3.   <u>Test 3.  Contraries : approximate composition</u>

A number of analyses of Radcliffe contraries showed about 50 % paper, 12 % plastic and 8 % textiles, i.e. approximately 70 % combustibles.

4. Test 4. Fines : approximate glass and total incombustible content

4.1. Test 4.1 : Glass content of the fines

A 15 kg sample of fines from the Radcliffe plant was taken and all recognisable glass removed manually as far as possible. The total weight of glass removed was 2 kg (13.3 %). This procedure was repeated with other samples. The results were very variable, but contents of about 7 to 23 % were found.

The glass content of the North Manchester fines was higher.

4.2. Test 4.2 : Total incombustible ("ash") content of the fines

Four samples of dry fines were analysed for their moisture and incombustibles contents. The incombustibles content on a dry basis (ODB) was also calculated. The following results were obtained:

| Sample | 1 | 2 | 3 | 4 |
|---|---|---|---|---|
| Moisture % | 40.0 | 40.8 | 40.5 | 38.5 |
| Incombustible % | 27.0 | 23.2 | 32.5 | 16.9 |
| Incombustible ODB % | 45.0 | 39.2 | 54.6 | 27.5 |

5.   <u>Test 5.  Analysis of Fines & Contraries</u>

A number of analyses of contraries and fines, from which metal and easily discernible glass had been removed, showed an approximate average composition as follows:

|  |  | Fines | Contraries |
|---|---|---|---|
| Moisture | % | 40 | 31 |
| Ash | % | 12.5 | 12 |
| Volatile matter | % | 38 | 48 |
| Fixed carbon | % | 9 | 8 |
| Chlorine | % | 0.3 | 0.75 |
| Sulphur | % | 0.2 | 0.2 |
| CV dry Btu/lb[1] | | 7270 | 8428 |
| CV wet Btu/lb[2] | | 4343 | 5787 |
| Metal/glass removed prior to grinding % | | 20 | 16* |
| * metal % of this | | | 5 |

1 CV of totally dried product

2 CV of as produced product

6.   <u>Test 6 : particle size distribution in the **fines**</u>

The purpose of this test was to establish the particle size distribution and to check how the ash/glass content varied with screened size.

An 18.25 kg sample was screened into the following fractions:

Above 1" square

Below 1", above ½"

Below ½", above ¼"

Below ¼"

and analysed.  The results were as shown below.

| | GLASS | OTHER INCOM-BUSTIBLE | MOISTURE | COMBUSTIBLE | TOTAL |
|---|---|---|---|---|---|
| | % | % | % | % | % |
| > 1" | 48.6 (= 0.656 kg) | 8.0 | 25.7 | 17.7 | 7.4 (= 1.3505 kg) |
| 1"–½" | 49.0 (= 2.110 kg) | 19.4 | 23.8 | 7.8 | 23.6 (= 4.307 kg) |
| ½"–¼" | 15.2 (= 1.065 kg) | 14.1 | 37.8 | 32.9 | 38.4 (= 7.008 kg) |
| < ¼" | 1.9 (= 0.106 kg) | 22.2 | 37.4 | 38.5 | 30.6 (= 5.5845 kg) |
| total | 21.6 (= 3.937 kg) | 17.4 | 33.4 | 27.6 | 100 (= 18.25 kg) |

Thus the sample was found to contain 21.6 % of "discernible" glass. Estimated true glass content: 22 to 23 %. This suggests that glass _is_ the major incombustible and is confirmed by the _total_ ash contents of the samples.

As a separation technique the above was relatively good (and simple) since, if the two smaller fractions are taken, one obtains 69 % product with 9.3 % glass (which represents 79.8 % of the total "non-glass "fraction). Taken on a 10 % wet basis, the glass content was $\frac{9.3}{0.7}$ = 13.3 %.

These results suggest that best results would be obtained by discarding the above ½" portion. It appears that the gentle drum treatment leaves the large majority of the glass in an easily separated condition.

7.   Test 7 : Separation of Fines into Fractions.

   Analysis of separated fractions

   Two samples of North Manchester fines produced by "wet" processing were separated on the Bootham North density separator.

   The separated fractions were analysed and the results are given below:

| Fraction | Sample 1 | | | Sample 2 | | |
|---|---|---|---|---|---|---|
| | Screenings | Lights | Mean | Screenings | Lights | Mean |
| Fraction % | 59.6 | 10.7 | 70.3 | 58.3 | 14.6 | 72.9 |
| Moisture % | 64.3 | 59.1 | 63.51 | 62.0 | 62.6 | 62.12 |
| Ash % | 7.3 | 5.1 | 6.97 | 10.0 | 5.1 | 9.02 |
| Volatile % | 23.3 | 29.5 | 24.24 | 23.2 | 26.1 | 23.76 |
| Fixed C % | 4.8 | 5.7 | 4.94 | 4.5 | 5.8 | 4.76 |
| Cl % | 0.15 | 0.42 | 0.19 | 0.16 | 0.30 | 0.19 |
| S % | 0.11 | 0.21 | 0.13 | 0.13 | 0.10 | 0.12 |
| C.V. dry  Btu/lb | 6700 | 7960 | 6915 | 6610 | 8010 | 6929 |
| C.V. wet  Btu/lb | 2390 | 3260 | 2522 | 2510 | 3000 | 2608 |

- 44 -

8. <u>Test 8: Separation into Fractions of both Fines and Contraries</u>
<u>Analysis of sub-classified Fines & Contraries</u>

Fines, contraries and rejects (heavies) samples from the Radcliffe plant (dry operation) were separated on the Bootham North density separator and the fines and contraries analysed. The results were as follows:

<u>Screenings and Lights</u>

| | Fines | | Contraries | |
|---|---|---|---|---|
| | Screen-ings | Lights | Screen-ings | Lights |
| Moisture % | 52.6 | 52.9 | 37.9 | 36.1 |
| Ash % | 13.4 | 7.4 | 21.8 | 7.8 |
| Volatile Matter % | 26.5 | 33.4 | 36.9 | 47.7 |
| Fixed Carbon % | 6.8 | 5.6 | 3.0 | 7.4 |
| Chlorine % | 0.28 | 0.43 | 0.30 | 0.90 |
| Sulphur % | 0.44 | 0.24 | 0.07 | 0.08 |
| CV dry Btu/lb | 6810 | 7660 | 6990 | 9440 |
| CV wet Btu/lb | 3230 | 3610 | 4340 | 6030 |

The products were substantially glass- and metal-free.

Calculation of calorific values:

The production proportions at Radcliffe are on average 43 % fines, 51 % contraries and 6 % Fe.

Separation fractions were:

Fines:  53.5 % Screenings, 33.5 % Lights, remainder
            Heavies

Contraries:  12.3 % Screenings, 54.9 Lights, remainder
            Heavies

| Total product make-up | % of total | % of product (excluding Heavies) | |
|---|---|---|---|
| Fines Screenings = 53.5 % of 43 % | = 23 % | : 32 % | ⎫ |
| Fines Lights = 33.5 % of 43 % | = 14.4 % | : 20 % | ⎬ 52 % ⎭ |
| Contraries Screenings = 12.3 % of 51 % | = 6.3 % | : 9 % | ⎫ |
| Contraries Lights = 54.9 % of 51 % | = 28 % | : 39 % | ⎬ 48 % ⎭ |
| | $\overline{71.7\ \%}$ | | |

Calorific value (Total excluding Heavies)

$0.32 \times 3230 + 0.2 \times 3610 + 0.09 \times 4340 + 0.39 \times 6030$

$=\ 1034\ \ \ +\ \ \ 722\ \ \ +\ \ \ 391\ \ \ +\ \ \ 2352$

$=\ 4549$ BTU/lb (Gross)

Fines alone        3377 BTU/lb (Gross)

Contraries alone  5731 BTU/lb (Gross)

<u>Fines Rejects (Heavies) from the Bootham North separator</u>

| Plant | North Manchester "wet" operation | | Radcliffe | |
|---|---|---|---|---|
| Fraction % | 29.6 | 27.0 | <u>29.1</u> | <u>27.8</u> |
| Moisture % | 76.3 | 65.0 | 72.5 | 73.7 |
| Ash        % | 3.7 | 7.2 | 5.6 | 6.5 |
| Volatile matter % | 16.2 | 23.0 | 18.0 | 16.6 |
| Fixed Carbon     % | 3.6 | 4.4 | 3.6 | 3.0 |
| Chlorine % | 0.12 | 0.26 | 0.21 | 0.16 |
| Sulphur  % | 0.09 | 0.09 | 0.12 | 0.07 |
| CV dry Btu/lb | 7630 | 7940 | 7940 | 7720 |
| CV wet Btu/lb | 1810 | 2780 | 2180 | 2030 |
| Glass/metal removed prior to drying | 30.9* | 38.5* | 49.3 | 48.9 |
| * metal % of this | 3.1 | 7.9 | | |

This shows clearly that the fuel value of the rejects is low.

CLAIMS

1. A process for treating refuse, which comprises subjecting refuse to rotary drum pulverisation with limited attrition, separating the pulverised refuse into a relatively glass-free portion and a glass-containing portion, and separating the glass-containing portion into a glass-rich fraction and a glass-lean fraction, the relatively glass-free portion and the glass-lean fraction being retained for fuel and/or compost production.

2. A process for treating refuse, which comprises subjecting refuse to rotary drum pulverisation with limited attrition, separating the pulverised refuse into fines and contraries and processing the fines and/or the contraries for production of fuel or compost or for production of fuel and compost.

3. A process as claimed in claim 2, wherein the fines are processed by a method comprising removal of a glass-rich fraction.

4. A process as claimed in claim 2 or claim 3, wherein the division into fines and contraries is at a size in the range of from 32 to 50 mm.

5. A process as claimed in any one of claims 1 to 4, wherein more than 50 % by weight of the pulverised refuse is in the relatively glass-free portion or contraries.

6. A process as claimed in claim 5, wherein at least 55 % by weight of the pulverised refuse is in the relatively glass-free portion or contraries.

7.    A process as claimed in claim 6, wherein at least 60 % by weight of the pulverised refuse is in the relatively glass-free portion or contraries.

8.    A process as claimed in any one of claims 1 to 7, wherein the residence time in the drum is in the range of from 1 to 2 hours.

9.    A process as claimed in any one of claims 1 to 8, wherein the drum is rotated at a speed in the range of from 1 to 2 rpm.

10.    A process as claimed in any one of claims 1 to 9, wherein the rotary drum pulverisation is carried out at a water content of the refuse in the range of from 30 to 40 % by weight.

11.    A process as claimed in claim 10, wherein the rotary drum pulverisation is carried out at a water content of the refuse of substantially 35 % by weight.

12.    A process as claimed in any one of claims 1 to 11, wherein the rotary drum pulverisation is carried out without addition of water.

13.    A process as claimed in any one of claims 1 to 12, wherein the volume of refuse in the drum is up to 40 % of the volume of the drum.

14.    A process as claimed in any one of claims 1 to 13, wherein in the pulverised product no more than 5 % by weight of the glass is less than 1/4 inch in size.

15. A process as claimed in any one of claims 1 to 14, wherein in the pulverised product more than 50 % by weight of the glass is 1/2 inch or more in size.

16. A process as claimed in claim 15, wherein in the pulverised product more than 70 % by weight of the glass is 1/2 inch or more in size.

17. A process as claimed in any one of claims 1 and 3 to 16, wherein the removal of the glass-rich fraction comprises density separation.

18. A process as claimed in any one of claims 1 and 3 to 17, wherein the removal of the glass-rich fraction comprises screening.

19. A process as claimed in claim 18, wherein the removal of the glass-rich fraction comprises mixed techniques whereby there is separation into screenings, lights and heavies, the heavies being discarded.

20. A process as claimed in claim 19, wherein the screenings pass through a substantially 10 mm screen.

21. A process as claimed in claim 19 or claim 20, wherein the screenings also pass through a secondary screen.

22. A process as claimed in any one of claims 1 to 21, wherein the relatively glass-free portion or contraries are processed by a method comprising one or more of the following steps: removing ferrous metal, shredding, further classifying.

23. A process as claimed in claim 22, wherein the further clasification comprises a density classification.

24. A process as claimed in claim 22 or claim 23, wherein the classification comprises mixed techniques as specified in any one of claims 19 to 21.

25. A process as claimed in any one of claims 19 to 24, wherein the products from the mixed technique screening(s) are combined on a size basis.

26. A process for treating refuse which comprises subjecting the refuse to rotary drum pulverisation and wherein the pulverised refuse

(a) in some instance(s) is separated into fines and contraries and the contraries and/or fines are processed for the production of fuel or compost or for the production of fuel and compost, and

(b) in other instance(s) is used as landfill, if desired after recovery of particular material(s), and wherein, in the case of (a), the rotary drum pulverisation is operated with limited attrition of the refuse.

27. A process as claimed in claim 26, wherein the rotary drum pulverisation and processing for fuel and/or compost production are as specified in any one of claims 4 to 25.

28.  A dual-purpose plant suitable for the production of fuel and/or compost feedstock and for the production of landfill, which comprises a rotary pulverising drum capable of being operated with limited attrition of the refuse, means for separating the product of the rotary drum pulverisation into a fines fraction and a contraries fraction such that the major portion of the glass is in the fines fraction, means for removal of ferrous metal from the contraries and means for shredding the contraries, and means for density separation of the fines into glass-lean and glass-rich fractions and, if desired, for density separation of the contraries.

29.  Fuel produced by a process as claimed in any one of claims 1 to 27.

30.  Compost feedstock produced by a process as claimed in any one of claims 1 to 27.

Fig.I.

Fig. 2.

DOTTED SHOWS FUEL/COMPOST PRODUCTION ROUTES

L = LIGHTS
S = SCREENINGS
R = REJECTS

2/4

0099261

3/4

0099261

RAW REFUSE
PULVERISE (DRY)

FINES — 43% — CONTRARIES — 57% — Fe

SHRED — 52%

5%

BALLISTIC SEPARATE

FERROUS METAL GIVE AWAY

SCREENING

OVERSIZE LIGHT — 43% — 21% — 31% — OVERSIZE HEAVY

HIGH GRADE SOLID FUEL

OIL FEEDSTOCK

LOW GRADE SOLID FUEL

COMPOST

REJECT-LANDFILL

FIG.3.

FIG. 4.